# FASCICULE DE BREVET EUROPEEN

(11) **EP 3 856 643 B1**
(45) Date de publication et mention de la délivrance du brevet: **13.07.2022**
(21) Numéro de dépôt: 19779611.3
(22) Date de dépôt: 26.09.2019
(51) Int. Cl.: B64G 1/22, F16F 1/10, F16F 1/12

(54) **DISPOSITIF DE FIXATION SERVANT A ASSEMBLER ENTRE EUX DES OBJETS, PUIS A LES LIBERER RAPIDEMENT**
BEFESTIGUNGSVORRICHTUNG ZUM ZUSAMMENFÜGEN UND SCHNELLLÖSEN ZWISCHEN GEGENSTÄNDEN
FASTENING DEVICE FOR ASSEMBLY AND QUICK RELEASE BETWEEN OBJECTS

(30) Priorité: 26.09.2018 FR 1858811
(43) Date de publication de la demande: 04.08.2021
(73) Titulaire: SOTEREM, 31322 Castanet Tolosan (FR)
(72) Inventeur: VALEMBOIS, Guy, 31650 Lauzerville (FR)
(74) Mandataire: Cabinet Bleger-Rhein-Poupon
(86) Numéro de dépôt international: PCT/IB2019/058177
(87) Numéro de publication internationale: WO 2020/065575

(56) Documents cités:
- EP-A1- 0 684 216
- EP-A1- 3 354 578
- WO-A1-2007/050561
- AT-A4- 510 027
- DE-A1-102014 000 288
- FR-A1- 2 930 305
- US-A1- 2015 233 293
- US-B2- 8 021 069

## Description

La présente invention concerne un dispositif de fixation servant à assembler entre eux des objets, puis à les libérer rapidement, formé d'un moyen de retenue configuré pour retenir avant libération un élément d'accrochage, ledit moyen de retenue étant constitué du rapprochement, autour d'une partie arrimable dudit élément d'accrochage, de plusieurs pièces séparables maintenues rapprochées par l'intermédiaire d'un moyen de précontrainte désengageable. Elle concerne plus particulièrement ledit moyen de précontrainte désengageable.

Un tel dispositif de fixation est utilisé dans le domaine des mécanismes de séparation utiles, non limitativement, lors du largage de charge sur avion, d'ouverture de générateurs solaires sur satellite, de libération de tout mécanisme de sécurité, etc.

Un tel dispositif de fixation est décrit dans le document WO 2009/138625 au Nom de la présente Demanderesse, et représenté sur la figure 1.

Selon ce document, le moyen de retenue se présente la forme d'une pince P, où les pièces séparables E sont liées les unes aux autres au travers de moyens déformables élastiquement qui tendent à les rappeler en écartement les unes des autres; tandis que lesdits moyens de précontrainte consistent en un élément constituant un lien L, enroulé autour desdites pièces séparables E en sorte de les maintenir refermées sur un élément d'accrochage R munie d'une extrémité arrimable non visible sur la figure, et dont au moins une extrémité est fixée à un mécanisme T de maintien de la tension exercée sur ce lien, qui comprend des moyens permettant de libérer cette tension à la demande.

De manière préférentielle, le lien se présente sous la forme d'un ruban en métal ou en matériau composite ou synthétique, enroulé sur lui-même pour être conformé une forme de ressort en spirale qui présente des caractéristiques de ressort, dont une extrémité, du côté de la spire intérieure, est solidarisée à l'une des parties séparables du moyen de retenue, tandis que l'autre extrémité, du côté de la spire extérieure est, après enroulement dudit ruban sur ledit moyen de retenue autour desdites parties séparables, solidarisée à un mécanisme de maintien permettant l'expansion dudit ruban à la libération.

Il a toutefois été constaté que ce mode de réalisation présente des inconvénients.

Le chargement dû à la sollicitation de la pince sous charge est principalement supporté par les spires intérieures du ressort spiral, ce qui induit donc une sur-contrainte sur ces spires intérieures alors que les spires extérieures sont soussollicitées.

Lors de l'usage simultané de plusieurs mécanismes de relâchement, la synchronisation des relâchements est directement dépendante du dispositif de commande qui doit libérer les rubans en spirale en même temps, en association avec la dynamique d'ouverture de ces rubans. Cela nécessite que ces rubans soient strictement identiques, ce qui est extrêmement difficile à réaliser par déformation plastique du métal.

En pratique la zone d'accrochage de l'extrémité intérieure est obtenue par pliage du ruban de métal, alors même que cette zone est la plus sollicitée. De ce fait cette zone cumule la sollicitation de traction fonctionnelle due à l'expansion sous charge avec la contrainte de dépliage du ruban métallique. Ce phénomène est particulièrement crucial car le métal plié à cet endroit est déjà fragilisé par sa mise en forme. En résumé, cette zone d'accrochage est un point très faible du ressort spiral.

La résistance à l'expansion du ressort spiral se fait principalement par friction entre les spires du ressort, ce qui n'interdit pas des glissements relatifs entre les spires, particulièrement constatés lors des cycles thermiques provoquant des dilatations propres à favoriser ces glissements. Ce dernier phénomène provoque la réduction du chargement des éléments à relâcher lors des cyclages thermiques.

La présente invention a pour but de proposer un dispositif de fixation, tel que défini précédemment, et dont moyen de précontrainte désengageable présente des caractéristiques permettant de remédier aux divers inconvénients précités.

Selon l'invention, le lien présente l'aspect d'un ruban enroulé en spirale et comporte des caractéristiques de ressort, et ce lien se caractérise en ce qu'il présente une épaisseur non constante, à savoir que cette épaisseur est décroissante depuis l'intérieur vers l'extérieur de la spirale, cette épaisseur décroissant avec l'angle de la spirale.

Le ressort ainsi obtenu, présente une inertie faible, en tous cas moins élevée que si l'épaisseur du ruban était constante comme pour un ressort spiral de type classique. Puisque de cette inertie découle la vitesse de déroulement du ressort lors de son relâchement, le moyen de précontrainte désengageable selon l'invention permet une dynamique d'ouverture plus rapide de la pince.

Selon une caractéristique additionnelle du dispositif de fixation selon l'invention, le ruban est fabriqué tel quel, dans sa forme finale, par un procédé de fabrication mettant en œuvre soit l'enlèvement de matière par usinage, soit l'agrégation de matière.

Un tel ressort en spirale n'est pas réalisé de manière habituelle par la mise en forme sous contrainte d'une bande de métal, il n'en présente donc pas les défauts. De manière avantageuse des ressorts conçus ainsi dans le même matériau présentent tous les mêmes caractéristiques, en sorte qu'ils peuvent être utilisés pour des déclenchements simultanés.

Selon un mode de réalisation particulier de l'invention, le procédé d'usinage est un procédé d'électroérosion au fil.

Selon un autre mode de réalisation particulier de l'invention, le procédé de fabrication par agrégation de matière est un procédé d'impression métallique 3D.

Selon un autre mode de réalisation particulier de l'invention, le procédé de fabrication par agrégation de matière est complété par une opération de moulage puis de solidification.

Le mode de fabrication du ressort selon l'invention permet des donner des formes particulières non réalisables par la méthode classique de mise en forme d'un ruban. Ainsi, non limitativement, chacune des extrémités peut présenter une forme fonctionnelle.

Selon une caractéristique additionnelle du dispositif de fixation selon l'invention, l'extrémité interne du ruban est rendue solidaire de l'un des éléments séparables, à cet effet ladite extrémité comporte un renflement engagé dans une cavité ménagée dans ledit élément séparable, de forme complémentaire et rétentrice.

Selon une autre caractéristique additionnelle du dispositif de fixation selon l'invention, l'extrémité externe du ruban est conformée en un crochet permettant la fixation d'un moyen apte à maintenir la tension.

Selon une autre caractéristique additionnelle du dispositif selon l'invention, l'extrémité externe du ruban comporte un moyen permettant de garantir le verrouillage de la position fermée, lequel consiste en un élément faisant saillie radialement dudit ruban, associé à une partie creuse de forme complémentaire apte à venir s'ancrer ledit élément lors de la mise en tension.

Selon une autre caractéristique additionnelle du dispositif selon l'invention, le ruban comporte sur une portion, susceptible de comprendre plusieurs spires, une multiplicité d'éléments faisant saillie radialement dudit ruban, ainsi qu'une multiplicité de parties creuses de forme complémentaire, les pas d'espacement étant choisis pour qu'en position de contrainte de la pince, chacun desdits éléments faisant saillie soit engagé dans une desdites parties creuses.

Selon une autre caractéristique additionnelle du dispositif selon l'invention, l'extrémité externe du ruban comporte un moyen permettant de garantir le verrouillage de la position fermée, lequel consiste en un rivet monté à ladite extrémité externe, et présentant une protubérance apte à coopérer avec un trou percé dans la spire extérieure dudit ruban.

Ce mode de réalisation du moyen de précontrainte désengageable selon l'invention présente d'autres avantages.

En position fermée et lors d'une sollicitation d'expansion, la contrainte de traction est quasi uniforme dans les spires.

Il est particulièrement résistant au niveau de son extrémité intérieure, ce qui permet d'y réaliser des moyens solides de fixation à la pince.

Dans le cas d'une fabrication par électroérosion au fil, cela permet l'usage de matériaux prétraités, donc particulièrement résistant tel que TA6V en grade 5, Inconel, acier dur etc.

D'autre part, une fabrication par électroérosion au fil permet également de garantir une précision propre à autoriser des dynamiques de déroulement similaires pour toute une population de ressorts, ce qui est particulièrement recherché pour un usage simultané et synchrone.

Les avantages et les caractéristiques du dispositif de fixation selon l'invention, ressortiront plus clairement de la description qui suit et qui se rapporte au dessin annexé, lequel en représente plusieurs modes de réalisation non limitatifs.

Dans le dessin annexé :
- la figure 1 représente une vue en perspective d'un dispositif de fixation de l'état de la technique et plus précisément selon le document WO 2009/138625
- la figure 2 représente une vue en perspective d'un de moyen de précontrainte d'un dispositif de fixation selon l'invention,
- la figure 3 représente une vue schématique du même dispositif de fixation, en utilisation.
- la figure 4 représente une vue schématique de plusieurs dispositifs de fixation selon l'invention mis en œuvre.

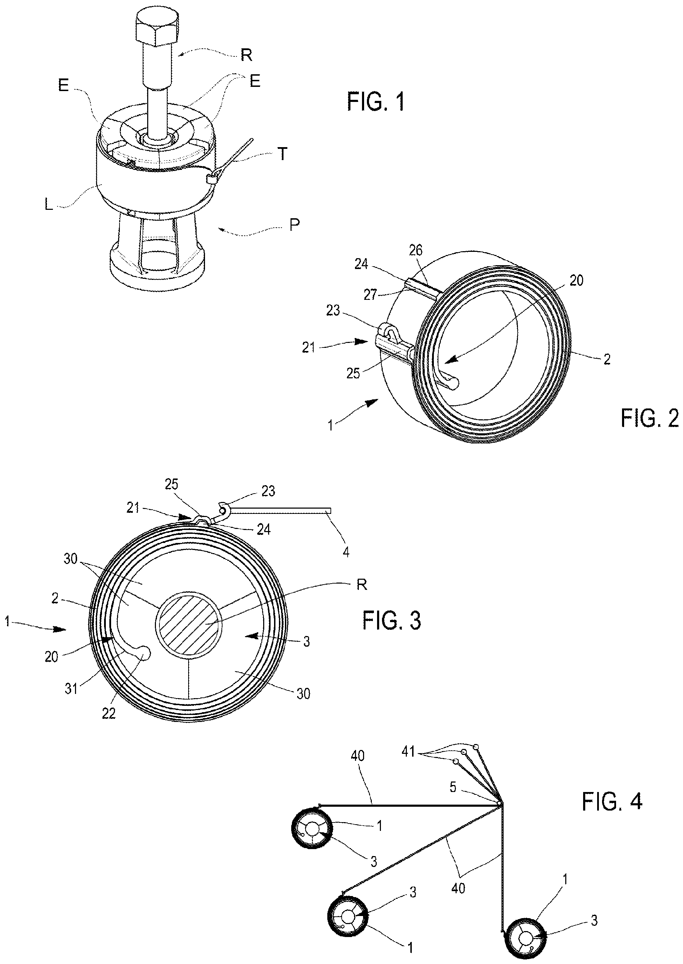

En référence à la figure 2, on peut voir un moyen de précontrainte désengageable 1 selon l'invention, lequel se présente sous la forme d'un ruban 2 enroulé en spirale, présentant la particularité d'être d'une épaisseur non constante, c'est-à-dire qu'elle est décroissante depuis l'extrémité interne 20 jusqu'à l'extrémité externe 21.

Cette caractéristique est liée au mode de fabrication de ce ruban, à savoir, selon l'invention, par enlèvement de matière par usinage, soit par agrégation de matière par impression 3D ou moulage.

De préférence, mais non limitativement, la décroissance est constante.

En référence maintenant à la figure 3, on peut voir le moyen de précontrainte désengageable 1 associé à une pince 3, du type de celle P de la figure 1 et décrite dans le document WO 2009/138625. De cette pince 3 ne sont visibles que trois éléments séparables 30, destinés à entourer et retenir un élément d'accrochage R, représenté schématiquement, pour former un dispositif de fixation.

Ces éléments séparables 30 sont par ailleurs rappelés élastiquement en écartement, le moyen de précontrainte désengageable 1 étant apte à les contraindre en rapprochement.

L'extrémité interne 20 et l'un des éléments séparables 30, sont conformés pour être solidarisés l'un à l'autre.

Selon le mode de réalisation représenté, l'extrémité interne 20 présente un renflement 22, tandis que l'élément séparable 30 comporte une cavité 31 de forme complémentaire, rétentrice, dans laquelle est engagé et retenu le renflement 22.

En l'occurrence, le renflement 22 est en forme de cylindre, d'axe parallèle à celui d'enroulement du ruban 2.

L'extrémité externe 21 est conformée en un crochet 23, permettant la fixation d'un moyen 4 de verrouillage.

De manière avantageuse, le moyen de précontrainte désengageable 1 selon l'invention, comporte en outre un moyen permettant de garantir le verrouillage de la position fermée, pour réaliser un blocage dans la direction ortho radiale pour verrouiller l'ouverture de la pince 3 et aussi un blocage dans le sens axial permettant une maîtrise de la position bloquée pendant les chocs et vibrations pouvant provoquer des glissement parasites des spires entre elles dans le sens axial. Le verrouillage se fait alors par obstacle, ce qui interdit tout glissement, même lors de sollicitations dues aux cyclages thermiques

Ce moyen consiste en deux éléments de formes complémentaires, un premier élément 24 faisant saillie de périphérie du ruban 2, et un second élément 25, disposé à la base du crochet 23, formant une empreinte creuse complémentaire de la forme du premier élément 24, et destiné après fermeture, à venir s'ancrer sur ce dernier.

De manière avantageuse et préférentielle, l'élément 24 se présente sous la forme d'une barre saillante disposée transversalement sur le ruban 2, et dont les côtés 26 et 27 sont biseautés, en sorte de ne pas s'opposer au décrochage et ne pas contrarier l'expansion lors du déverrouillage.

Selon une variante, non représentée, le ruban 2 comporte plusieurs éléments 24 disposés et espacés longitudinalement éventuellement sur plusieurs spires, ainsi que plusieurs éléments 25 chacun apte à coopérer avec un élément 24, en position resserrée autour de la ponce 3.

En référence à la figure 4, on peut voir l'utilisation de trois pinces 3, chacune équipée d'un moyen de précontrainte désengageable 1 selon l'invention.

Les trois pinces 3 sont toutes en position fermée, les moyens de précontrainte désengageable 1 verrouillés au travers de liens 40, qui passent sur une goupille de déclenchement 5 qui renvoie angulairement les liens 40 vers des moyens 41 de fixation et de maintien en tension des liens 40.

On comprendra que le retrait de la goupille de déclenchement 5 provoque le relâchement simultané de la tension de tous les liens 40, et l'expansion des moyens de précontrainte désengageable 1 et l'ouverture des pinces 3.

## Revendications

1. Dispositif de fixation servant à assembler entre eux des objets, puis à les libérer rapidement, formé d'un moyen de retenue (P ; 3) configuré pour retenir avant libération un élément d'accrochage (R), ledit moyen de retenue (P ; 3) étant constitué du rapprochement, autour d'une partie arrimable dudit élément d'accrochage (R), de plusieurs pièces séparables (E ; 30) rappelées élastiquement en écartement les unes des autres et maintenues rapprochées autour dudit élément d'accrochage (R) par l'intermédiaire d'un moyen de précontrainte désengageable (L ; 2), lequel moyen de précontrainte (L ; 2) consiste en un élément constituant un lien, enroulé autour desdites pièces séparables (E ; 30) en sorte de les maintenir refermées sur ledit élément d'accrochage (R), et dont au moins une extrémité est fixée à un mécanisme (T ; 4) de maintien de la tension exercée sur ce lien, qui comprend également des moyens permettant de libérer cette tension à la demande, et où ledit lien (L ; 2) présente l'aspect d'un ruban enroulé en spiral et comporte des caractéristiques de ressort, **caractérisé en ce que** ledit ruban (2) présente une épaisseur non constante, à savoir que cette épaisseur est décroissante depuis l'intérieur vers l'extérieur de la spirale, cette épaisseur décroissant avec l'angle de la spirale.

2. Dispositif de fixation selon la revendication 1, **caractérisé en ce que** ce qu'il est fabriqué tel quel, dans sa forme finale, par un procédé de fabrication mettant en œuvre soit l'enlèvement de matière par usinage, soit l'agrégation de matière.

3. Dispositif de fixation selon la revendication 2, **caractérisé en ce que** le procédé d'usinage est un procédé d'électroérosion au fil.

4. Dispositif de fixation selon la revendication 2, **caractérisé en ce que** le procédé de fabrication par agrégation de matière est un procédé d'impression métallique 3D.

5. Dispositif de fixation selon la revendication 2, **caractérisé en ce que** le procédé de fabrication par agrégation de matière est complété par une opération de moulage puis de solidification.

6. Dispositif de fixation selon l'une quelconque des revendications 2 à 5, **caractérisé en ce que** l'extrémité interne (20) du ruban (2) est rendue solidaire de l'un des éléments séparables (30), à cet effet ladite extrémité (20) comporte un renflement (22) engagé dans une cavité (31) ménagée dans ledit élément séparable (30), de forme complémentaire et rétentrice.

7. Dispositif de fixation selon l'une quelconque des revendications 2 à 6, **caractérisé en ce que** l'extrémité externe (21) du ruban (2) est conformée en un crochet (23) permettant la fixation d'un moyen (40) apte à maintenir la tension.

8. Dispositif de fixation selon l'une quelconque des revendications 1 à 7, **caractérisé en ce que** l'extrémité externe (21) du ruban (2) comporte un moyen permettant de garantir le verrouillage de la position fermée, lequel consiste en un élément (24) faisant saillie radialement dudit ruban (2), associé à une partie creuse (25) de forme complémentaire apte à venir s'ancrer ledit élément (24) lors de la mise en tension.

9. Dispositif de fixation selon la revendication 8, **caractérisé en ce que** le ruban (2) comporte sur une portion, susceptible de comprendre plusieurs spires, une multiplicité d'éléments (24) faisant saillie radialement dudit ruban (2), ainsi qu'une multiplicité de parties creuses (25) de forme complémentaire, les pas d'espacement étant choisis pour qu'en position de contrainte de la pince, chacun desdits éléments (24) faisant saillie soit engagé dans une desdites parties creuses (25) .

10. Dispositif de fixation selon l'une quelconque des revendications 1 à 6, **caractérisé en ce que** l'extrémité externe (21) du ruban (2) comporte un moyen permettant de garantir le verrouillage de la position fermée, lequel consiste en un rivet monté à ladite extrémité externe (21), et présentant une protubérance apte à coopérer avec un trou percé dans la spire extérieure dudit ruban (2).

## Patentansprüche

1. Befestigungsvorrichtung, die einem Zusammensetzen von Objekten, gefolgt von ihrem schnellen Freigeben dient, die aus einem Zurückhaltemittel (P; 3) ausgebildet ist, das zum Zurückhalten eines Verhakungselements (R) vor dem Freigeben konfiguriert ist, wobei das Zurückhaltemittel (P; 3) aus der Annäherung, um einen festmachbaren Teil des Verhakungselements (R) herum, von mehreren trennbaren Stücken (E; 30) besteht, die voneinander beabstandet elastisch zurückgezogen und durch ein lösbares Vorspannmittel (L; 2) um das Verhakungselement (R) herum angenähert gehalten werden, wobei das Vorspannmittel (L; 2) aus einem Element besteht, das ein Bindeglied darstellt, das um die trennbaren Stücke (E; 30) herum so gewickelt ist, um sie auf dem Verhakungselement (R) geschlossen zu halten, und von dem mindestens ein Ende an einem Mechanismus (T; 4) zum Halten der auf dieses Bindeglied ausgeübten Spannung befestigt ist, der ebenfalls Mittel umfasst, die es ermöglichen, diese Spannung bei Bedarf freizugeben, und wobei das Bindeglied (L; 2) die Erscheinung eines spiralförmig gewickelten Bandes aufweist und Federeigenschaften präsentiert, **dadurch gekennzeichnet, dass** das Band (2) eine nicht konstante Dicke präsentiert, und zwar dass diese Dicke von der Innenseite zu der Außenseite der Spirale abnimmt, wobei diese Dicke mit dem Winkel der Spirale abnimmt.

2. Befestigungsvorrichtung nach Anspruch 1, **dadurch gekennzeichnet, dass** sie in ihrer endgültigen Form durch ein Herstellungsverfahren unverändert hergestellt wird, das entweder das Entfernen von Material durch Bearbeitung oder das Aggregieren von Material einsetzt.

3. Befestigungsvorrichtung nach Anspruch 2, **dadurch gekennzeichnet, dass** das Bearbeitungsverfahren ein Drahtfunkenerosionsverfahren ist.

4. Befestigungsvorrichtung nach Anspruch 2, **dadurch gekennzeichnet, dass** das Herstellungsverfahren durch Aggregieren von Material ein 3D-Metalldruckverfahren ist.

5. Befestigungsvorrichtung nach Anspruch 2, **dadurch gekennzeichnet, dass** das Herstellungsverfahren durch Aggregieren von Material durch einen Formvorgang gefolgt von einer Verfestigung ergänzt wird.

6. Befestigungsvorrichtung nach einem der Ansprüche 2 bis 5, **dadurch gekennzeichnet, dass** das innere Ende (20) des Bandes (2) mit einem der trennbaren Elemente (30) fest verbunden ist, wobei das Ende (20) zu diesem Zweck einen Buckel (22) aufweist, der in einen Hohlraum (31) mit komplementärer und rückhaltender Form eingreift, der in dem trennbaren Element (30) vorgesehen ist.

7. Befestigungsvorrichtung nach einem der Ansprüche 2 bis 6, **dadurch gekennzeichnet, dass** das äußere Ende (21) des Bandes (2) als einen Haken (23) ausgebildet ist, der die Befestigung eines Mittels (40) ermöglicht, das geeignet ist, um die Spannung zu halten.

8. Befestigungsvorrichtung nach einem der Ansprüche 1 bis 7, **dadurch gekennzeichnet, dass** das äußere Ende (21) des Bandes (2) ein Mittel aufweist, das es ermöglicht, die Blockierung der geschlossenen Position zu gewährleisten, das aus einem Element (24) besteht, das von dem Band (2) radial vorsteht, das einem vertieften Teil (25) mit komplementärer Form zugeordnet ist, das geeignet ist, um das Element (24) während des Spannens zu verankern.

9. Befestigungsvorrichtung nach Anspruch 8, **dadurch gekennzeichnet, dass** das Band (2) auf einem Abschnitt, der imstande ist, mehrere Windungen zu umfassen, eine Vielzahl von Elementen (24), die von dem Band (2) radial vorstehen, sowie eine Vielzahl von vertieften Teilen (25) mit komplementärer Form umfasst, wobei die Abstandsschritte gewählt sind, damit in der belasteten Position der Klemme jedes der vorstehenden Elemente (24) in einen der vertieften Teile (25) eingreift.

10. Befestigungsvorrichtung nach einem der Ansprüche 1 bis 6, **dadurch gekennzeichnet, dass** das äußere Ende (21) des Bandes (2) ein Mittel aufweist, das es ermöglicht, die Blockierung der geschlossenen Position zu gewährleisten, das aus einer Niete besteht, die an dem äußeren Ende (21) montiert ist, und einen Vorsprung präsentiert, der geeignet ist, um mit einem Loch zusammenzuwirken, das in die äußere Windung des Bandes (2) gebohrt ist.

## Claims

1. Fastening device used to assemble objects together and then to release them quickly, which fastening device is formed of a retaining means (P; 3) designed to retain a hooking element (R) prior to release, said retaining means (P; 3) consisting of the bringing together, around a stowable part of said hooking element (R), of a plurality of separable parts (E; 30) which are resiliently biased apart from one another and kept close together around said hooking element (R) via a disengageable prestressing means (L; 2), which prestressing means (L; 2) consists of an element forming a link which is wound around said separable parts (E; 30) so as to keep them closed on said hooking element (R), and of which link at least one end is fastened to a mechanism (T; 4) for maintaining the tension exerted on this link, which mechanism also comprises means for releasing this tension on demand, said link (L; 2) having the appearance of a strip wound in a spiral and comprising spring characteristics, **characterized in that** said strip (2) has a non-constant thickness, i.e. this thickness decreases from the inside towards the outside of the spiral, this thickness decreasing with the angle of the spiral.

2. Fastening device according to claim 1, **characterized in that** it is manufactured as it is, in its final form, by a manufacturing process which implements either the removal of material by machining or the aggregation of material.

3. Fastening device according to claim 2, **characterized in that** the machining process is a wire spark erosion process.

4. Fastening device according to claim 2, **characterized in that** the material aggregation manufacturing process is a 3D metal printing process.

5. Fastening device according to claim 2, **characterized in that** the material aggregation manufacturing process is completed by a molding operation followed by solidification.

6. Fastening device according to any of claims 2 to 5, **characterized in that** the internal end (20) of the strip (2) is secured to one of the separable elements (30), and for this purpose said end (20) comprises a bulge (22) engaged in a cavity (31) formed in said separable element (30), which cavity has a complementary and retainable shape.

7. Fastening device according to any of claims 2 to 6, **characterized in that** the external end (21) of the strip (2) is shaped like a hook (23) which allows a means (40) capable of maintaining the tension to be fastened thereto.

8. Fastening device according to any of claims 1 to 7, **characterized in that** the external end (21) of the strip (2) comprises a means for guaranteeing the locking of the closed position, which means consists of an element (24) projecting radially from said strip (2), which element is associated with a hollow part (25) that has a complementary shape and is capable of anchoring said element (24) during tensioning.

9. Fastening device according to claim 8, **characterized in that** the strip (2) comprises, on one portion which is capable of comprising a plurality of turns, a plurality of elements (24) projecting radially from said strip (2), as well as a plurality of hollow parts (25) having a complementary shape, the spacing pitches being selected such that, when the clamp is in a stressed position, each of said projecting elements (24) is engaged in one of said hollow parts (25).

10. Fastening device according to any of claims 1 to 6, **characterized in that** the external end (21) of the strip (2) comprises a means for guaranteeing the locking of the closed position, which means consists of a rivet mounted on said external end (21), the means having a protrusion capable of cooperating with a hole made in the outer turn of said strip (2).
